**Europäisches Patentamt**

(19) **European Patent Office**

**Office européen des brevets**

(11) Publication number : **0 483 234 B1**

(12) **EUROPEAN PATENT SPECIFICATION**

(45) Date of publication of patent specification :
30.11.94 Bulletin 94/48

(51) Int. Cl.⁵ : **H04N 7/04**

(21) Application number : **90911351.6**

(22) Date of filing : **18.07.90**

(86) International application number :
**PCT/US90/03942**

(87) International publication number :
**WO 91/01611 07.02.91 Gazette 91/04**

(54) **A METHOD OF SUBCARRIER MULTIPLICATION WHICH PRESERVES AM INFORMATION IN FM SYSTEMS.**

(30) Priority : **20.07.89 US 382773**

(43) Date of publication of application :
**06.05.92 Bulletin 92/19**

(45) Publication of the grant of the patent :
**30.11.94 Bulletin 94/48**

(84) Designated Contracting States :
**AT BE CH DE DK ES FR GB IT LI LU NL SE**

(56) References cited :
**WO-A-83/03329
FR-A- 2 445 063
GB-A- 870 238
PATENT ABSTRACTS OF JAPAN, vol. 007, no. 013 (E-153) 19 January 1983; & JP-A-57170678
NHK TECHNICAL MONOGRAPH, no. 37, November 1987, Tokyo, JP; pages 1-32; T. KOMOTO et al.: "NHK Studies of PCM Sound Transmission for Satellite Broadcasting"**

(73) Proprietor : **SCIENTIFIC ATLANTA, INC.
One Technology Parkway,
Box 105600
Atlanta, GA 30348 (US)**

(72) Inventor : **ROVIRA, Luis, A.
3286 Lansbury Village Drive, Apt. 5
Atlanta, GA 30341 (US)**
Inventor : **WOMBLE, David, P.
3748 Jamestown Court
Doraville, GA 30340 (US)**
Inventor : **WALTER, Allen
3959 Cotswold Drive
Lilburn, GA 30247 (US)**
Inventor : **DENNISON, Robert
42 Tavistrock Road
Cambridge CB4 3NB (GB)**

(74) Representative : **Altenburg, Udo, Dipl.-Phys. et al
Patent- und Rechtsanwälte
Bardehle . Pagenberg . Dost . Altenburg .
Frohwitter . Geissler & Partner
Galileiplatz 1
D-81679 München (DE)**

EP 0 483 234 B1

## Description

Background of the invention

The present invention is generally related to frequency modulated (FM) television systems and, more particularly, to FM television systems capable of carrying television channels without removing amplitude modulated (AM) information from the audio carrier. The present invention is intended for use in FM television system such as, but not limited to satellite, MDS, MMDS, CATV cable super-trunk, and fiber supertrunk systems.

There exists a number of systems for the removal of signal noise or error.

Patent Abstracts of Japan, vol. 007, no. 013 (E-153) 19 January 1983, & JP-A-57 170678 (Matsushita Denki Sangyo KK) 20 October 1982 discloses a synchronous sound demodulating technique for reducing noise on an audio signal. A bandpass filter passes the video IF signal. A limiter and divider circuit reduces (removes) all amplitude and phase modulation (information) and thus outputs a carrier wave having a frequency equal to the video IF signal. An IF amplifier passes the audio IF signal to a mixer. The mixer mixes the audio IF signal with the carrier wave to produce the audio signal at the intercarrier frequency having reduced noise due to the removal of the sidebands during the mixing process.

Great Britain Patent GB-A-0 870,238 discloses a frequency conversion system to remove signal error. An input signal (ft) is split into two paths. In one path, the input signal (ft) is mixed with heterodyning oscillator (fH) and filtered to remove the difference component (ft-FH). The difference component is mixed in second and third mixers with a reference signal (fo), with the reference signal shifted 90° in the third mixer. The difference components (ft-fH-fo = Af) are output from the second and third mixers and input to a first and second (matched) modulators respectively. The matched modulators also have the heterodyning signal fH as inputs. The output of the matched modulators are linearly combined to produce a compensating signal having a frequency equal to the sum of the hererodyning signal fH and the error Δf. This compensation signal is mixed with the original input (ft) to correct the frequency and remove the error (Δf)

FR-A-2 445 063 discloses a simply constructed frequency synthesizer for generating a carrier frequency and a pilot frequency.

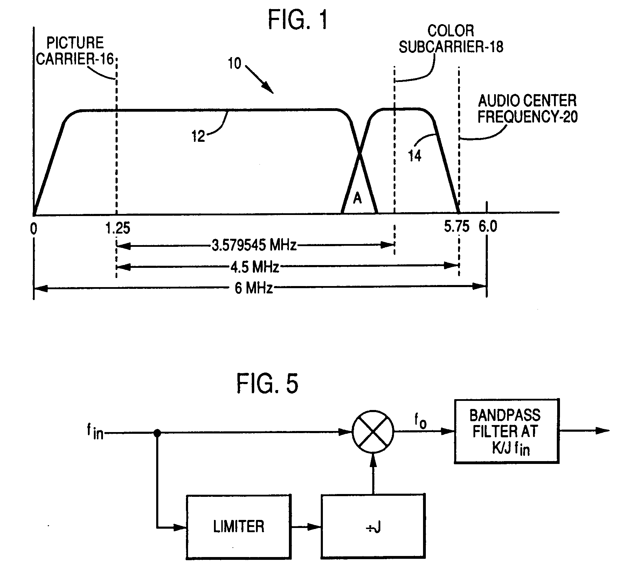

In the United States, terrestrial television broadcasts and most cable television (CATV) distribution is made according to National Television Systems Committee (NTSC) standards. Fig. 1 is an amplitude.vs.-frequency diagram illustrating in simplified form the RF spectrum of a typical NTSC television signal, referenced to the lower edge of a channel. NTSC standards require that picture information be separated into two components: luminance, or brightness, and chrominance, or color. The composite television signal 10 of Fig. 1 includes a luminance signal 12 and a chrominance signal 14. A composite television signal is one in which chrominance is carried on a subcarrier. (Other composite signals are SECAM, which is used in France, and PAL which predominates in the rest of Europe). The signal occupies a nominal bandwidth of 6 MHz, with the picture carrier 16 being 1.25 MHz above the lower end of the band. Chrominance information is modulated onto a color subcarrier 18 which is combined with the base band luminance information. This composite baseband is in turn used to amplitude modulate the picture carrier 16. The color subcarrier 18 has a frequency of 3.579545 MHz, a standard established by NTSC.

In terrestrial television broadcasts and CATV distribution, audio information is frequency modulated onto another carrier 20 lying near the upper edge of the band. The audio carrier 20 has a frequency that is 4.5 MHz greater than that of the video carrier, another standard established by NTSC. The choice of 4.5 MHz for the audio subcarrier frequency represents a tradeoff of signal quality for minimum spectral bandwidth in domestic AM television systems. At this relatively low subcarrier frequency some spectral overlap occurs between video and audio information, and some degradation of the signals is tolerated due to the filters required to later separate the signals.

A television receiver receives both carriers simultaneously and extracts the original composite baseband signal. The composite baseband audio and video signals contain the necessary information to reconstruct the original picture and sound information.

Some systems transmit video and audio by frequency modulating a carrier with the processed composite video-plus-audio-subcarrier waveform. These will be referred to as FM television systems. These systems are often used in satellite television, some CATV supertrunks, studio to transmitter links and other applications requiring high quality video transmission. This process is particularly useful and effective in preserving signal quality through high noise, high loss, low signal level or high interference channels.

The tradeoff discussed above regarding the choice of frequency for the audio carrier can be alleviated in FM television systems. In FM television systems, the occupied bandwidth of the signal is not simply related to the baseband bandwidth. It is possible to use higher frequency subcarriers than 4.5 MHz, and not increase occupied bandwidth. Since FM systems are often used where minimum signal degradation is required, higher frequency subcarriers are often used. To compensate for the increased noise at higher frequencies in FM systems, the deviation of the subcarrier is also increased.

Problems can occur when attempting to carry scrambled video channels on FM television systems. Transmitted video is often scrambled or encoded to prevent viewing by unauthorized or non-paying persons. In many scrambling systems and their variations, the information required to decode or descramble the video is sent as AM on the FM audio carrier. In a similar fashion, many systems transmit terminal control or address information as AM on the audio carrier. At times, amplitude modulation of the audio carrier may be used to predistort the audio carrier in an effort to reduce interfering buzz due to the descrambling process as discussed in US-A- 4 922 532 and entitled "Synch Supression Scrambling And Descrambling Television Signals For Subscription TV" incorporated herein by the foregoing reference thereto. Other applications of AM on the audio carrier exist. In the process of multiplying the audio carrier from the normal 4.5 MHz to a higher frequency. FM television systems destroy AM information on the audio carrier, as described in the following section.

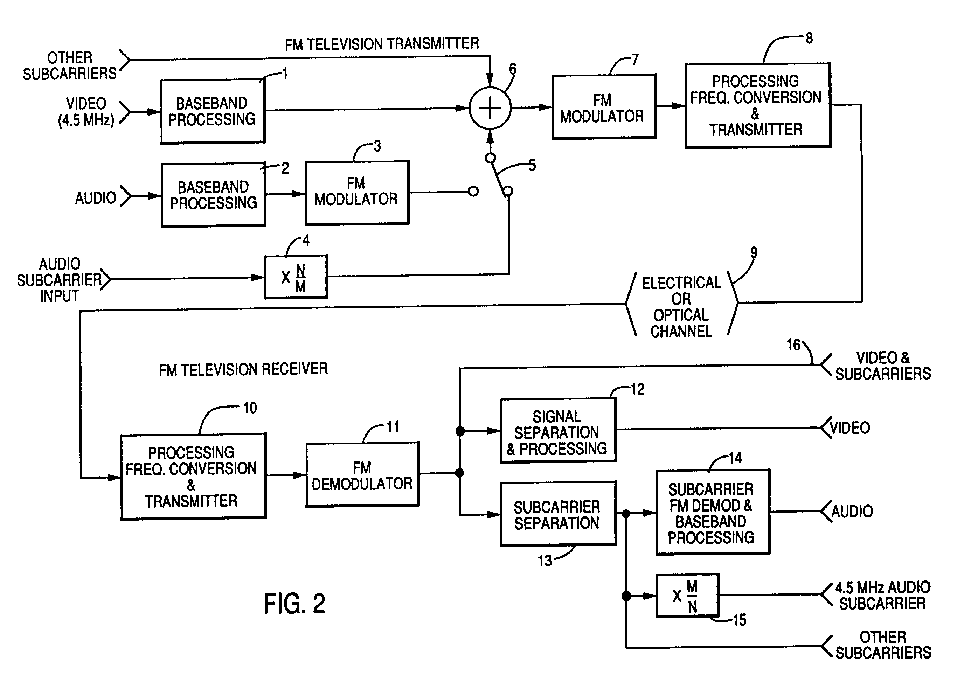

Figure 2 is a block diagram illustrating a prior art FM video transportation system. Audio may be supplied as baseband and processed internally by baseband processor 2 and FM modulated by FM modulator 3. In this instance, there is no provision for amplitude modulated information on the audio carrier. Rather than the internally modulated audio, switch 5 can select an alternate path. In this alternate path, the audio is supplied as a previously modulated carrier. This carrier is normally frequency modulated with the audio signal. and may also be carrying amplitude modulated information as described above. This carrier is typically multiplied at multiplier circuit 4 by a predetermined rational number N/M and proceeds through the switch 5 to summation circuit 6.

The summed compsite video and subcarrier(s) then frequency modulate a carrier at FM modulator 7. The output of FM modulator 7 may then be processed, frequency converted and transmitted as schematically indicated at block 8 in accordance with any of a number of prior art processes through a channel 9.

At the receive end, the signal may be frequency converted and further processed as indicated at block 10 and FM demodulated by FM demodulator 11. It is then separated by filter circuits 12 and 13 into video and subcarriers, respectively. The audio subcarrier can be demodulated by demodulator 14 into baseband. The audio subcarrier can also be multiplied by multiplier 15 with the reciprocal rational number (M/N) to the multiplier 4 in the transmitter and sent to the output as a 4.5 MHz carrier.

The above-described system is unable to pass any amplitude information on the audio carrier. If the audio is modulated internally by FM modulator 3, no provision is made for amplitude modulation. If an external audio subcarrier is brought in with amplitude modulated information, multiplier 4 acts as a limiter and removes the information. Multiplier 15 at the receive end also acts so as to remove amplitude information. Finally, limiting action in the subcarrier FM demodulator 14 will also tend to remove any AM information.

When a system such as that described above is required to pass audio carrier amplitude information, a 4.5 MHz audio carrier is typically summed with the baseband video (or, in one case, a low frequency video carrier) externally, and both are passed through the video baseband circuits 1. At the receive end, a composite video plus subcarrier output can be used that bypasses the internal separation circuits as indicated at 16. Though this technique will work, it combines the video with a 4.5 MHz subcarrier. As previously discussed, this is less than optimal. In most applications, a subsequent separation of the two is required. This separation will be imperfect and thus the scheme conflicts with the goal of low signal degradation, which may have been the original reason for using an FM system.

As discussed above, it is desirable, in an FM television system, to alter the frequency of the audio subcarrier to a frequency higher than 4.5 MHz. Ideally, the audio carrier processing circuits should possess the following properties. First. the frequency of the audio carrier should be increased at the transmitter and restored at the receiver to exactly the original 4.5 MHz. The increase in frequency is required to better separate video and audio information. Exact frequency restoration is required in order to remain within FCC intercarrier frequency tolerances.

Second, the deviation of the audio carrier should be increased at the transmitter and restored at the receiver to exactly the original deviation. The increase in deviation is required to offset the additional noise at the higher subcarrier frequency. Exact restoration to the original deviation is required for BTSC stereo.

Finally, amplitude information on the audio carrier must be preserved in order to pass scrambled video systems.

None of the known prior art accomplishes all three of these objectives simultaneously.

## SUMMARY OF THE INVENTION

Accordingly, it is an object of the present invention to provide an FM television system capable of carrying television channels without removing AM information from the audio carrier, while at the same time, preserving the frequency accuracy of the audio carrier.

It is another object of the present invention to provide such an FM television system without reducing video quality.

It is another object of the present invention to provide such an FM television system without reducing audio quality.

The invention is as set out in the claims.

## BRIEF DESCRIPTION OF THE DRAWINGS

A more complete appreciation of the present invention and many of the attendant advantages thereof will be readily obtained as the invention becomes better understood through the following detailed description when read in conjunction with the accompanying drawings.

Figure 1 is an amplitude-vs.-frequency diagram illustrating in simplified form a typical NTSC television signal.

Figure 2 is a block diagram of a prior art FM video communication system.

Figure 3 is a block diagram illustrating the present invention as utilized in the transmit portion of the system of Figure 2.

Figure 4 is a block diagram illustrating the present invention as utilized in the receive portion of the system of Figure 3.

Figure 5 is a general block diagram of the present invention.

## DETAILED DESCRIPTION OF A PREFERRED EMBODIMENT

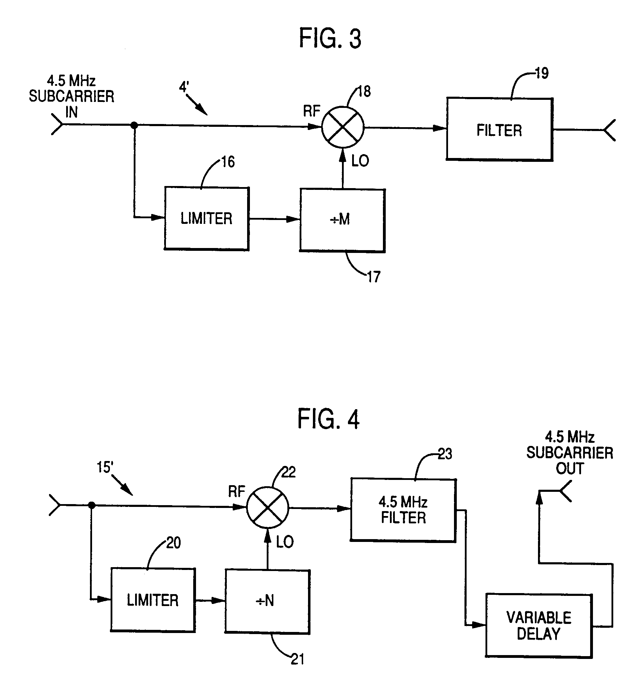

Figures 3 and 4 represent block diagrams of the present invention.

Figure 3 illustrates a multiplication circuit 4' utilized in the transmitter portion of an FM video communication system. The circuit of Figure 3 may be substituted for the multiplier 4 of Figure 2. The incoming 4.5 MHz subcarrier is split into two paths. In the first path, the subcarrier is supplied directly to the RF input of a mixer 18. The signal in the second path is limited by limiter 16. This limiting removes any AM information from the signal in this second path. The output of limiter 16 is divided by a factor M by divider circuit 17. The output of divider circuit 17 is supplied to the LO input of mixer 18. A bandpass filter 19 at the output of mixer 18 selects the appropriate mixer output signal to provide the required rational multiplication factor (N/M).

Mixer 18 passes any amplitude modulation on the subcarrier supplied to its RF input. Thus, scrambling, timing, address. control and/or amplitude predistortion information are preserved. Additionally, the deviation on the incoming subcarrier is also multiplied by the factor (N/M).

It will be apparent to those of ordinary skill that various circuits and arrangements may be utilized to provide the above-described limiting, dividing, mixing and filtering functions and the present invention is not limited to a specific arrangement of circuit components. For example, divider circuit 17 may comprise an injection locked oscillator and limiting circuit 20 may comprise an AGC loop. The filtering may be performed with any band limiting device, for example. It will be apparent that particular arrangements will depend on various factors such as intended use, design considerations, acceptable tolerance, et cetera.

Figure 4 illustrates a multiplication circuit 15' utilized in the receiver portion of an FM communication system. The circuit of Figure 4 may be substituted for multiplier 15 of Figure 2. The output of the subcarrier separator 13 of Figure 2 is split into two paths. The first path leads directly to the RF input of mixer 22. The signal in the second path is limited by limiter 20. This limiting removes any AM information from the signal in this second path. The output of limiter 20 is divided by a factor N by divider circuit 21. The output of divider circuit 21 is supplied to the LO input of mixer 22. A bandpass filter 23 at the output of mixer 22 selects the appropriate mixer output signal to provide the required rational multiplication factor (M/N) which is the reciprocal of the factor utilized at the transmitter. This restores the subcarrier to its original frequency at the input of the transmitter and maintains identical AM and FM information.

Again, the mixer passes any amplitude modulation of the subcarrier at its RF input. The deviation of the subcarrier is also multiplied by the factor (M/N), and is thus restored to its original value at the input of the transmitter.

Thus, each of the three requirements described above are met by the present invention.

A variable delay circuit 24 is added at the output of the bandpass filter. This delay, along with a deliberate timing advance in the video scrambler, provides a means for compensating any timing errors introduced by the different signal paths of the audio and video carriers.

Figure 5 is a general block diagram illustrating either the receive or transmit half of the present invention. The input frequency is fin and the output frequency is fo. In general, if a multiplication factor of K/J is desired, the following equation can be written:

$$fo = a \times fin + b \times (fin/J)$$

where b is a positive or negative integer. a is restricted to +1 or -1 since fin is supplied to the linear input of the mixer. Now,

$$fo = (K/J) \times fin = a \times fin + b \times (fin/J)$$
$$= (a + b/J) fin$$

Therefore

$$K/J = a + b/J$$
$$K = J(a + b/J)$$
$$K = (J \times a) + b$$

For example, if it is desired to multiply 4.5 MHz by 3/2 to get 6.75 MHz,

$$K = 3, J = 2$$

then

$$K = 2a + b = 3$$

The values

$$a = 1, b = 1$$

will satisfy this requirement.

More than one combination of a and b values may work, but the lowest absolute value of b usually provides the best performance. In general, the output bandpass filter is used to select the desired mixing product. A filter may also be required at the output of the divider to improve the duty cycle after division.

## Claims

1. A circuit for processing a signal including a carrier which has been amplitude and frequency modulated to alter carrier frequency deviation of the signal by a selected factor N/M, where N and M are integers, while preserving the amplitude modulation of the signal, said circuit comprising:
   means (16; 20) for removing the amplitude modulation from the signal to generate a second signal which includes the carrier frequency and the frequency modulation;
   means (18; 22) for mixing the signal with said second signal to generate at an output of said mixing means a plurality of mixing products which include at least sum and difference products of the signal and said second signal; and
   means (19; 23) for filtering said output of said mixing means to select the mixing product which includes the carrier frequency and frequency deviation altered by the selected factor along with the amplitude modulation.

2. The circuit according to claim 1, wherein said carrier is an audio subcarrier for use in a FM television system, said FM television system is especially a supertrunk system.

3. The circuit according to claim 1 or 2, wherein said amplitude modulation on said audio subcarrier is television descrambling information.

4. The circuit according to any of the preceding claims, wherein said selected factor N/M is greater than 1 and said circuit comprises a portion of an FM transmitter, or said selected factor N/M is less than 1 and said circuit comprises a portion of an FM television receiver.

5. The circuit according to any of the preceding claims, wherein said signal comprises an audio subcarrier at a frequency of 5.75 MHz.

6. The circuit according to any of the preceding claims, said circuit comprising dividing means (17; 21) coupled between said removing means (16; 20) and said mixing means (18; 22), for dividing the carrier frequency and the frequency deviation of said second signal by said integer M or N.

7. A method of processing a signal including a carrier which has been amplitude and frequency modulated to alter carrier frequency and frequency deviation of the signal by a selected factor N/M, where N and M are integers, while preserving the amplitude modulation of the signal, said method comprising the steps of:
   removing (16; 20) the amplitude modulation from the signal to generate a second signal which includes the carrier frequency and the frequency modulation;
   mixing (18; 22) the signal with the second signal to generate a plurality of mixing products which include at least sum and difference products of the signal and the second signal; and
   filtering (19; 23) the plurality of mixing products to select the mixing product which includes the carrier frequency and frequency deviation altered by the selected factor N/M along with the amplitude modulation.

8. The method according to claim 7, said method comprising the step of dividing (17; 21) the carrier frequency and frequency deviation of said second signal by the integer M or N prior to said step of mixing.

9. The method according to claim 7 or 8, wherein the selected factor (N/M) is greater than 1 or less than 1.

10. The method of any of the claims 7 to 9, wherein said amplitude modulation on said signal is television descrambling information.

11. Circuitry for processing a first signal including a carrier which has been amplitude and frequency modulated to alter carrier frequency and frequency deviation of the first signal at a transmitter side and at a receiver side of an FM television system to prevent spectral overlap of signals, while preserving the amplitude modulation of the first signal, said circuitry comprising:
   (a) a first circuit (4'), comprising a portion of an FM television transmitter; for increasing the frequency and frequency deviation of the first signal by a first selected factor N/M, where N and M are integers, while preserving the amplitude modulation, said first circuit comprising:
      (i) first removing means (16) for removing the amplitude modulation from the first signal to generate a second signal which includes the carrier frequency and the frequency modulation of the first signal;
      (ii) first mixing means (18) for mixing the first signal with said second signal to generate at an output of said first mixing means a plurality of mixing products which include at least sum and difference products of the first and second signals; and

(iii) first filtering means (19) for filtering said output of said first mixing means to select the mixing product as a third signal which includes a carrier frequency and a frequency deviation altered by the first selected factor N/M along with the amplitude modulation; and

(b) a second circuit (15'), comprising a portion of a FM television receiver, for decreasing the frequency and frequency deviation of the third signal by a second selected factor M/N, where the second selected factor M/N, is a reciprocal of the first selected factor N/M while preserving the amplitude modulation, said second circuit comprising:

(i) second removing means (20) for removing the amplitude modulation from said third signal to generate a fourth signal which includes the carrier frequency and the frequency deviation of said third signal;

(ii) second mixing means (22) for mixing the third signal with the fourth signal to generate at an output of said second mixing means a plurality of mixing products which include at least the sum and difference products of the third and the fourth signals; and

(iii) second filtering means (23) for filtering said output of said second mixing means to select the mixing product as a fifth signal which includes a carrier frequency and a frequency deviation altered by said second selected factor M/N and containing the amplitude modulation, wherein the carrier frequency, frequency deviation, frequency and amplitude modulation of the fifth signal are equal to the carrier frequency, frequency deviation, frequency and amplitude modulation, respectively, of the first signal.

12. Circuitry according to claim 11, wherein said first circuit (4') further comprises dividing means (17), coupled between said first removing means (16) and said first mixing means (18) for dividing the carrier frequency and frequency deviation of said second signal by said integer M.

13. Circuitry according to claims 11 or 12, wherein said second circuit (15') further comprises dividing means (21), coupled between said second removing means (20) and said second mixing means (22), for dividing the carrier frequency and frequency deviation of said fourth signal by said integer N.

**Patentansprüche**

1. Schaltung zum Verarbeiten eines Signales, das einen Träger aufweist, der amplituden- und frequenzmoduliert ist, um eine Trägerfrequenzabweichung des Signales um einen ausgewählten Faktor N/M zu ändern, wobei N und M ganze Zahlen sind, während die Amplitudenmodulation des Signales bewahrt wird, wobei die Schaltung aufweist:

Eine Einrichtung (16; 20) zum Entfernen der Amplitudenmodulation von dem Signal, um ein zweites Signal zu erzeugen, das die Trägerfrequenz und die Frequenzmodulation aufweist;

eine Einrichtung (18; 22) zum Mischen des Signales mit dem zweiten Signal, um an einem Ausgang der Mischeinrichtung eine Vielzahl von Mischprodukten zu erzeugen, die zumindest Summen- und Differenzprodukte des Signales und des zweiten Signales aufweisen; und

eine Einrichtung (19; 23) zum Filtern der Ausgabe der Mischeinrichtung, um das Mischprodukt auszuwählen, das die Trägerfrequenz und die Frequenzabweichung aufweist, die durch den ausgewählten Faktor zusammen mit der Amplitudenmodulation geändert worden sind.

2. Schaltung gemäß Anspruch 1, wobei der Träger ein Audio-Subträger zur Verwendung in einem FM-Fernsehsystem ist, wobei das FM-Fernsehsystem insbesondere ein Superleitungs-System ist.

3. Schaltung gemäß Anspruch 1 oder 2, wobei die Amplitudenmodulation auf dem Audio-Subträger eine Fernseh-Entwürfelungsinformation ist.

4. Schaltung gemäß einem der vorhergehenden Ansprüche, wobei der ausgewählte Faktor N/M größer als 1 ist und wobei die Schaltung einen Abschnitt eines FM-Übertragers aufweist, oder wobei der ausgewählte Faktor N/M kleiner als 1 ist, und wobei die Schaltung einen Abschnitt eines FM-Fernsehempfängers aufweist.

5. Schaltung gemäß einem der vorhergehenden Ansprüche, wobei das Signal einen Audio-Subträger bei einer Frequenz von 5,75 MHz aufweist.

6. Schaltung gemäß einem der vorhergehenden Ansprüche, wobei die Schaltung Teilungseinrichtungen (17; 21) aufweist, die zwischen den entfernenden Einrichtungen (16; 22) und den Mischeinrichtungen (18; 22) gekoppelt sind, um die Trägerfrequenz und die Frequenzabweichung des zweiten Signales um die ganze Zahl M oder N zu teilen.

7. Verfahren zum Verarbeiten eines Signales, das einen Träger aufweist, der amplituden- und frequenzmoduliert worden ist, um die Trägerfrequenz und die Frequenzabweichung des Signales um einen ausgewählten Faktor N/M zu ändern, wobei N und M ganze Zahlen sind, während die Amplitudenmodulation des Signales bewahrt wird, wobei das Verfahren die Schritte aufweist: Entfernen (16; 20) der Amplitudenmodulation von dem Signal, um ein zweites Signal zu erzeugen, das die Trägerfrequenz und die Frequenzmodulation aufweist; Mischen (18; 22) des Signales mit dem zweiten Signal, um eine Vielzahl von Mischprodukten zu erzeugen, die zumindest Summen- und Differenzprodukte des Signales und des zweiten Signales aufweisen; und Filtern (19; 23) der Vielzahl von Mischprodukten, um das Mischprodukt auszuwählen, das die Trägerfrequenz und die Frequenzabweichung aufweist, die durch den ausgewählten Faktor N/M zusammen mit der Amplitudenmodulation geändert worden sind.

8. Verfahren gemäß Anspruch 7, wobei das Verfahren den Schritt des Teilens (17; 21) der Trägerfrequenz und der Trägerabweichung des zweiten Signales um die ganze Zahl M oder N vor dem Schritt des Mischens aufweist.

9. Verfahren gemäß Anspruch 7 oder 8, wobei der ausgewählte Faktor (N/M) größer als 1 oder kleiner als 1 ist.

10. Verfahren gemäß einem der Ansprüche 7 bis 9, wobei die Amplitudenmodulation auf dem Signal eine Fernseh-Entwürfelungsinformation ist.

11. Schaltung zum Verarbeiten eines ersten Signales, das einen Träger aufweist, der amplituden- und frequenzmoduliert worden ist, um die Trägerfrequenz und die Frequenzabweichung des ersten Signales an einer Übertragerseite und einer Empfängerseite eines FM-Fernsehsystemes zu ändern, um spektrales Überlappen von Signalen zu verhindern, während die Amplitudenmodulation des ersten Signales bewahrt wird, wobei die Schaltung aufweist:

(a) eine erste Schaltung (4′), die einen Abschnitt eines FM-Fernsehübertragers aufweist, um die Frequenz und die Frequenzabweichung des ersten Signales um einen ersten ausgewählten Faktor N/M zu erhöhen, wobei N und M ganze Zahlen sind, während die Amplitudenmodulation bewahrt wird, wobei die erste Schaltung aufweist:

(i) eine erste entfernende Einrichtung (16) zum Entfernen der Amplitudenmodulation von dem ersten Signal, um ein zweites Signal zu erzeugen, das die Trägerfrequenz und die Frequenzmodulation des ersten Signales aufweist;

(ii) eine erste Mischeinrichtung (18) zum Mischen des ersten Signals mit dem zweiten Signal, um an einem Ausgang der ersten Mischeinrichtung eine Vielzahl von Mischprodukten zu erzeugen, die zumindest Summen- und Differenzprodukte der ersten und zweiten Signale aufweisen;

(iii) eine erste Filtereinrichtung (19) zum Filtern der Ausgabe der ersten Mischeinrichtung, um das Mischprodukt als ein drittes Signal auszuwählen, das eine Trägerfrequenz und eine Frequenzabweichung aufweist, die durch den ersten ausgewählten Faktor N/M zusammen mit der Amplitudenmodulation geändert worden ist; und

(b) eine zweite Schaltung (15′), die einen Abschnitt eines FM-Fernsehempfängers aufweist, um die Frequenz und die Frequenzabweichung des dritten Signales um einen zweiten ausgewählten Faktor M/N zu erniedrigen, wobei der zweite ausgewählte Faktor M/N ein Reziproker des ersten ausgewählten Faktors N/M ist, während die Amplitudenmodulation bewahrt wird, wobei die zweite Schaltung aufweist:

(i) eine zweite entfernende Einrichtung (20) zum Entfernen der Amplitudenmodulation von dem dritten Signal, um ein viertes Signal zu erzeugen, das die Trägerfrequenz und die Frequenzabweichung des dritten Signals aufweist;

(ii) eine zweite Mischeinrichtung (22) zum Mischen des dritten Signales mit dem vierten Signal, um an einem Ausgang der zweiten Mischeinrichtung eine Vielzahl von Mischprodukten zu erzeugen, die zumindest die Summen- und Differenzprodukte der dritten und vierten Signale aufweisen; und

(iii) eine zweite Filtereinrichtung (23) zum Filtern der Ausgabe der zweiten Mischeinrichtung, um das Mischprodukt als ein fünftes Signal auszuwählen, das eine Trägerfrequenz und eine Frequenzabweichung aufweist, die durch den zweiten ausgewählten Faktor M/N geändert worden sind, und die Amplitudenmodulation enthält, wobei die Trägerfrequenz, die Frequenzabweichung, die Frequenz- und Amplitudenmodulation des fünften Signales jeweils gleich der Trägerfrequenz, der Frequenzabweichung, der Frequenz- und Amplitudenmodulation des ersten Signales sind.

**12.** Schaltung gemäß Anspruch 1, wobei die erste Schaltung (4') weiter eine Teilungseinrichtung (17) aufweist, die zwischen der ersten entfernenden Einrichtung (16) und der ersten Mischeinrichtung (18) gekoppelt ist, um die Trägerfrequenz und die Frequenzabweichung des zweiten Signales um die ganze Zahl M zu teilen.

**13.** Schaltung gemäß Anspruch 11 oder 12, wobei die zweite Schaltung (15') weiter eine Teilungseinrichtung (21) aufweist, die zwischen der zweiten entfernenden Einrichtung (20) und der zweiten Mischeinrichtung (22) gekoppelt ist, um die Trägerfrequenz und die Frequenzabweichung des vierten Signales um die ganze Zahl N zu teilen.

**Revendications**

**1.** Un circuit pour traiter un signal comprenant une porteuse qui a été modulée en amplitude et en fréquence, en modifiant la déviation en fréquence de la porteuse du signal d'un facteur choisi N/M, N et M étant des entiers, tout en préservant la modulation d'amplitude du signal, ce circuit comprenant :

des moyens (16 ; 20) pour éliminer la modulation d'amplitude du signal afin de produire un second signal qui comprend la fréquence porteuse et la modulation de fréquence;

des moyens (18 ; 22) pour mélanger le signal avec ce second signal pour produire sur une sortie de ces moyens mélangeurs une pluralité de produits de mélange qui comportent au moins des produits somme et différence du signal et dudit second signal ; et

des moyens (19 ; 23) pour filtrer cette sortie des moyens mélangeurs afin de sélectionner le produit de mélange qui comprend la fréquence porteuse et la déviation de fréquence modifiée du facteur choisi, ainsi que la modulation d'amplitude.

**2.** Le circuit de la revendication 1, dans lequel la porteuse est une sous-porteuse audio pour utilisation dans un système de télévision MF, ce système de télévision MF étant en particulier un système de super-artère de communication.

**3.** Le circuit de la revendication 1 ou 2; dans lequel la modulation d'amplitude sur la sous-porteuse audio est une information de désembrouillage de télévision.

**4.** Le circuit de l'une des revendications précédentes, dans lequel le facteur choisi N/M est supérieur à 1 et le circuit forme une partie d'un émetteur MF, ou le facteur choisi N/M est inférieur à 1 et le circuit forme une partie d'un récepteur de télévision MF.

**5.** Le circuit de l'une des revendications précédentes, dans lequel le signal comprend une sous-porteuse audio à une fréquence de 5,75 MHz.

**6.** Le circuit de l'une des revendications précédentes, ce circuit comprenant des moyens diviseurs (17 ; 21), montés entre les moyens éliminateurs (16 ; 20) et les moyens mélangeurs (18 ; 22), pour diviser la fréquence porteuse et la déviation de fréquence du second signal par l'entier M ou N.

**7.** Un procédé pour traiter un signal comprenant une porteuse qui a été modulée en amplitude et en fréquence, en modifiant la déviation en fréquence de la porteuse du signal d'un facteur choisi N/M, N et M étant des entiers, tout en préservant la modulation d'amplitude du signal, ce procédé comprenant les étapes suivantes :

élimination (16 ; 20) de la modulation d'amplitude du signal afin de produire un second signal qui comprend la fréquence porteuse et la modulation de fréquence ;

mélange (18 ; 22) du signal avec ce second signal pour produire une pluralité de produits de mélange qui comportent au moins des produits somme et différence du signal et dudit second signal ; et

filtrage (19 ; 23) de la pluralité de produits de mélange afin de sélectionner le produit de mélange qui comprend la fréquence porteuse et la déviation de fréquence modifiée du facteur choisi, ainsi que la modulation d'amplitude.

**8.** Le procédé de la revendication 7, ce procédé comprenant l'étape de division (17 ; 21) de la fréquence porteuse et de la déviation de fréquence du second signal par l'entier M ou N, avant l'étape de mélange.

**9.** Le procédé de la revendication 7 ou 8, dans lequel le facteur choisi (N/M) est supérieur à 1 ou inférieur à 1.

**10.** Le procédé de l'une des revendications 7 à 9, dans lequel la modulation d'amplitude du signal est une information de désembrouillage de télévision.

**11.** Ensemble de circuits pour traiter un premier signal comprenant une porteuse qui a été modulée en amplitude et en fréquence, en modifiant la fréquence porteuse et la déviation en fréquence du premier signal côté émetteur et côté récepteur d'un système de télévision MF pour empêcher le chevauchement spectral des signaux tout en préservant la modulation d'amplitude du premier signal, cet ensemble de circuits comprenant :

a) un premier circuit (4'), formant une partie d'un émetteur de télévision MF, pour augmenter la fréquence et la déviation en fréquence du premier signal d'un premier facteur choisi N/M, N et M étant des entiers, tout en préservant la modulation d'amplitude, ce premier circuit comprenant :

i) des premiers moyens éliminateurs (16), pour éliminer la modulation d'amplitude du premier signal afin de produire un second signal qui comprend la fréquence porteuse et la modulation de fréquence du premier signal ;

ii) des premiers moyens mélangeurs (18), pour mélanger le premier signal avec le second signal afin de produire sur une sortie de ces premiers moyens mélangeurs une pluralité de produits de mélange qui comprennent au moins des produits somme et différence du premier et du second signal ; et

iii) des premiers moyens de filtrage (19), pour filtrer la sortie des premiers moyens mélangeurs afin de sélectionner, sous forme d'un troisième signal, le produit de mélange qui comprend une fréquence porteuse et une déviation de fréquence modifiées du premier facteur choisi N/M ainsi que la modulation d'amplitude ; et

b) un second circuit (15'), formant une partie d'un récepteur de télévision MF, pour diminuer la fréquence et la déviation en fréquence du troisième signal d'un second facteur choisi M/N, le second facteur choisi M/N étant inverse du premier facteur N/M, tout en préservant la modulation d'amplitude, ce second circuit comprenant :

i) des seconds moyens éliminateurs (20), pour éliminer la modulation d'amplitude du troisième signal afin de produire un quatrième signal qui comprend la fréquence porteuse et la modulation de fréquence du troisième signal ;

ii) des seconds moyens mélangeurs (22), pour mélanger le troisième signal avec le quatrième signal afin de produire sur une sortie de ces seconds moyens mélangeurs une pluralité de produits de mélange qui comprennent au moins des produits somme et différence du troisième et du quatrième signal ; et

iii) des seconds moyens de filtrage (23), pour filtrer la sortie des seconds moyens mélangeurs afin de sélectionner, sous forme d'un cinquième signal, le produit de mélange qui comprend une fréquence porteuse et une déviation de fréquence modifiées du second facteur choisi M/N ainsi que la modulation d'amplitude, la fréquence porteuse, la déviation en fréquence et la modulation de fréquence et d'amplitude du cinquième signal étant identiques, respectivement, à la fréquence porteuse, la déviation en fréquence, et à la modulation de fréquence et d'amplitude du premier signal.

12. Ensemble de circuits selon la revendication 11, dans lequel le premier circuit (4') comprend en outre des moyens diviseurs (17), montés entre les premiers moyens éliminateurs (16) et les premiers moyens mélangeurs (18), pour diviser par l'entier M la fréquence porteuse et la déviation en fréquence du second signal.

13. Ensemble de circuits selon la revendication 11 ou 12, dans lesquels le second circuit (15') comprend en outre des moyens diviseurs (21), montés entre les seconds moyens éliminateurs (20) et les seconds moyens mélangeurs (22), pour diviser par l'entier N la fréquence porteuse et la déviation en fréquence du quatrième signal.

## FIG. 1

PICTURE
CARRIER-16

COLOR
SUBCARRIER-18

AUDIO CENTER
FREQUENCY-20

10

12

14

A

0    1.25

5.75  6.0

←————3.579545 MHz————→

←————4.5 MHz————→

←————————6 MHz————————→

## FIG. 5

f$_{in}$

LIMITER

÷J

f$_{o}$

BANDPASS
FILTER AT
K/J f$_{in}$

EP 0 483 234 B1

FIG. 2

EP 0 483 234 B1

FIG. 3

4.5 MHz
SUBCARRIER
IN

4'

RF  ⊗ 18

FILTER 19

16
LIMITER  →  ÷M

17

LO

FIG. 4

15'

RF  ⊗ 22

4.5 MHz
FILTER  23

4.5 MHz
SUBCARRIER
OUT

20
LIMITER  →  ÷N

21

LO

VARIABLE
DELAY